# EUROPÄISCHE PATENTANMELDUNG

(11) **EP 4 116 629 A1**
(43) Veröffentlichungstag der Anmeldung: **11.01.2023**
(21) Anmeldenummer: 22180929.6
(22) Anmeldetag: 24.06.2022
(51) Int. Cl.: F24D 17/00

(54) **VORRICHTUNG UND VERFAHREN ZUR WÄRMERÜCKGEWINNUNG BEI NUTZWASSER**

(30) Priorität: 06.07.2021 DE 102021117454
(71) Anmelder: Schmöle GmbH, 58730 Fröndenberg (DE)
(72) Erfinder: Neumann, Till, 58640 Iserlohn (DE)
(74) Vertreter: Roche, von Westernhagen & Ehresmann

(57) **Zusammenfassung**

Die Erfindung betrifft eine Vorrichtung (10) zur Wärmerückgewinnung bei Nutzwasser, umfassend mindestens ein, insbesondere einstückigstoffschlüssiges, Wärmetauscherrohr (17 ,20) und einen Körper (9) mit einem im Wesentlichen flächenhaften, insbesondere plattenartigen, Bereich (8), wobei das mindestens eine Wärmetauscherrohr (17, 20), insbesondere aus Kupfer oder Edelstahl, entlang einer zur Haupterstreckungsebene (E₁) des Bereichs (8) nicht orthogonalen, insbesondere zu dieser parallelen, Ebene (E₂, E₃) ausgerichtet ist.

## Beschreibung

Die Erfindung betrifft gemäß einem ersten Aspekt eine Vorrichtung zur Wärmerückgewinnung bei Nutzwasser.

Die Bedeutung eines effizienten Wärmemanagements bei Nutzwasser, also beispielsweise bei Duschwasser, nimmt in unserer Gesellschaft aus offensichtlichen Gründen zu.

So bestehen erste, druckschriftlich nicht belegbare Überlegungen, bereits genutztes und dafür erwärmtes Nutz- oder Duschwasser nicht einfach in die Kanalisation ablaufen zu lassen, sondern vorher dessen (Rest-)Wärme im Sinne einer Wärmerückgewinnung zu nutzen.

Dem liegt folgende Idee zugrunde:
Während man, insbesondere im Privatbereich, bei herkömmlichen Duschen oder Spülen mit Hilfe von Mischbatterien stark erhitztes Wasser (typischerweise im Bereich von 60-80°C) mit völlig ungewärmten Wasser vermischt, wird gemäß den genannten Überlegungen auch das letztgenannte, eigentlich ungewärmte Wasser vorgewärmt.

Hierzu sind geradlinige Abflussrohre bekannt, bei welchen das verbrauchte und bereits erhitzte, abfließende Nutzwasser an dem ankommenden, bisher noch unerwärmten Wasser vorbeigeleitet wird, so dass dieses vorgewärmt wird.

Das ankommende, nunmehr bereits vorgewärmte Wasser erlaubt es dann, zum Einstellen einer gewünschten Endtemperatur an der Mischbatterie bzw. Armatur weniger von dem stark erhitzten Wasser oder stark erhitztes Wasser einer niedrigeren Temperatur zu verwenden (alternativ kann das vorgewärmte Wasser in einem zentralen Tank gespeichert werden).

Auf diese Weise wird auf jeden Fall eine gewisse Wärmerückgewinnung und somit eine Energieeinsparung erreicht.

Auch wenn besagte, druckschriftlich nicht belegbare, wärmerückgewinnende Abflussrohre sicherlich ein erster Schritt in die Richtung einer Wärmerückgewinnung sind, bestehen naturgemäß Bestrebungen, derartige Vorrichtungen hinsichtlich ihrer Effizienz zu verbessern.

Die Erfindung löst die gestellte Aufgabe gemäß einem ersten Aspekt mit den Merkmalen des Anspruches 1 und demnach insbesondere dadurch, dass eine entsprechende Vorrichtung mindestens ein Wärmetauscherrohr und einen Körper mit einem im Wesentlichen flächenhaften Bereich umfasst, wobei das Wärmetauscherrohr nicht geradlinig ausgebildet ist.

Insbesondere ist es entlang einer zur Haupterstreckungsebene des Bereichs nicht orthogonalen Ebene ausgerichtet (kann aber längenmäßig insbesondere auch über den Bereich hinausragen).

Mit anderen Worten besteht die Idee der Erfindung darin, ein nichtgeradliniges Wärmetauscherrohr flach(-bauend) unterhalb des Körpers anzuordnen.

Auf diese Weise können Vorrichtungen besonders platzsparend ausgebildet werden.

Des Weiteren wird auf diese Art eine besonders effiziente Wärmerückgewinnung erreicht, da das verbrauchte, sich typischerweise zunächst oberhalb des Körpers ansammelnde, bereits erwärmte Nutzwasser, nach Art eines Flächenwärmetauschers noch besser zur Vorerwärmung des eigentlich kühlen Frischwassers genutzt werden kann.

So kann das bereits verbrauchte Nutzwasser seine Wärme nicht nur während des Abfließens (also nachdem es den Dusch- oder Spülenbereich bereits verlassen hat) zur Erwärmung des Frischwassers an dieses abgeben, sondern bereits während es sich noch im Dusch- oder Spülenbereich, insbesondere im Bereich eines Abflusses, befindet.

Außerdem kann durch die besonders flachbauende Ausbildung einer derartigen Vorrichtung eine Kompatibilität mit bestehenden, nachzurüstenden Einrichtungen, beispielsweise zum Duschen oder Spülen, erreicht werden.

Durch die flachbauende Ausgestaltung der Vorrichtung können nämlich auf einfache Weise bei völlig herkömmlichen Einbausituationen (beispielsweise bei Duschen oder bei Spülen) Wärmerückgewinnungseffekte erzielt werden, ohne dass die baulichen Voraussetzungen aufwendig zu ändern wären.

Eine derartige flachbauende Ausgestaltung ermöglicht sogar die Nachrüstung bestehender Einrichtungen oder Systeme, so dass diese von einem herkömmlichen System, welches keine Rückgewinnung ermöglicht, zu einem wärmerückgewinnenden System umgestaltet werden können, insbesondere ohne, dass dieses für einen Nutzer sichtbar wäre oder diese Ausgestaltung eines gesteigerten Säuberungs- oder Revisionsbedarfs unterliegen würde (da das verbrauchte Wasser analog zu normalen Abläufen abfließt).

Beispielsweise kann eine erfindungsgemäße Vorrichtung dafür unter einer herkömmlichen Duschtasse, Duschwanne, Spüle oder ähnlichem vorgesehen, insbesondere dort verklebt oder sonstwie angebracht, werden.

Alternativ sind von der Erfindung aber natürlich auch Vorrichtungen umfasst, welche bereits als Körper eine Duschtasse, Duschwanne oder ähnliches umfassen, bei welchen das mindestens eine Wärmetauscherrohr mithin als Baueinheit gemeinsam mit einem solchen Körper (und an diesem gegebenenfalls vormontiert) geliefert wird.

Eine "nicht-geradlinige Ausbildung" bedeutet im Sinne der Erfindung insbesondere, dass das Wärmetauscherrohr eine Biegung vollzieht, sich mithin in eine Ebene hineinerstreckt.

Gemäß einer Ausgestaltung der Erfindung ist mindestens ein Wärmetauscherrohr entlang einer zur Haupterstreckungsebene eines flächenhaften Bereichs des Körpers nicht orthogonalen bzw. senkrechten Ebene ausgerichtet. Das bedeutet also, dass das Wärmetauscherrohr entlang einer Ebene ausgerichtet ist, bzw. sich typischerweise in einer Ebene erstreckt, welche nicht orthogonal bzw. senkrecht zur Haupterstreckungsebene des Bereichs des Körpers ausgerichtet ist. Die Ebenen bilden gerade keinen 90°-Winkel zueinander aus.

Das Wärmetauscherrohr ist vorzugsweise also entlang einer Ebene ausgerichtet, was im Wesentlichen bedeutet, dass besagte Ebene von der Richtung der größten Erstreckung des Wärmetauscherrohres und der Richtung der zweitgrößten Erstreckung aufgespannt wird.

Beispielsweise kann das Wärmetauscherrohr mäanderförmig oder als Rohrmäander ausgebildet sein. Wenn man einen derartigen Mäander flach auf den Boden legt, stellt die Bodenebene in etwa die Ebene dar, entlang welcher das Rohr ausgerichtet ist.

Ein solcher Rohrmäander ist dabei typischerweise im Wesentlichen in zwei Ebenen, mithin flach, ausgebildet.

Vorzugsweise ist das Wärmetauscherrohr im Sinne der Erfindung im Wesentlichen flach ausgebildet, erstreckt sich also im Wesentlichen im zweidimensionalen Raum, bzw. (ausschließlich) in einer Ebene. In anderen Fällen kann jedoch beispielsweise eine diagonale Geometrie vorliegen.

Grundsätzlich ist es aber auch von der Erfindung umfasst, wenn sich das Rohr zusätzlich auch in eine Richtung orthogonal zur besagten Ebene erstreckt. Entscheidend ist dann aber, dass die Ebene, entlang welcher das Wärmetauscherrohr ausgerichtet ist, die Ebene ist, welche von den zwei Richtungen aufgespannt wird, in welche sich das gesamte Wärmetauscherrohr am längsten erstreckt.

Gemäß der vorteilhaftesten Ausgestaltung der Erfindung ist das Wärmetauscherrohr in oder entlang einer Ebene ausgerichtet, welche parallel zum im Wesentlichen flächenhaften Bereich des Körpers ausgebildet ist. Dies erlaubt eine besonders kompakte Bauform der Vorrichtung.

Beispielsweise erstreckt sich ein geradliniges Abflussrohr, welches senkrecht von dem Duschbereich einer Dusche wegführt, somit lediglich in einer orthogonalen Ebene zur Haupterstreckungsebene des im Wesentlichen flächenhaften Bereichs des Körpers und fällt somit nicht unter die Erfindung.

Erfindungsgemäß ist ohnehin vorgesehen, dass das Wärmetauscherrohr nicht linear bzw. nicht geradlinig ausgebildet ist.

Das Wärmetauscherrohr kann insbesondere gebogen ausgebildet sein oder bogenförmige Abschnitte aufweisen oder jedenfalls seine Richtung (insbesondere kontinuierlich) ändern.

Nicht orthogonal bedeutet im Sinne der vorliegenden Erfindung auch, dass das Wärmetauscherrohr entlang einer Ebene ausgerichtet sein kann, welche zur Haupterstreckungsebene des Bereiches (leicht) verkippt ist. Vorteilhafterweise ist die Ebene zur Haupterstreckungsebene des Bereiches um nicht mehr als 45° verkippt. Auch dies sichert eine kompakte und flache Bauweise der gesamten Vorrichtung.

Erfindungsgemäß ist vorgesehen, dass mindestens ein Wärmetauscherrohr vorhanden ist. Grundsätzlich können aber natürlich auch mehr als ein Wärmetauscherrohr vorgesehen sein, beispielsweise zwei oder noch mehr, welche insbesondere in Reihe geschaltet sein können.

Das Rohr kann in Gänze eine Mäanderform aufweisen oder eine Bogenform oder ähnliches.

Alternativ kann auch ein Rohrmäander, insbesondere in Harfenform, vorliegen, welcher aus mehreren Wärmetauscherrohren zusammengesetzt ist.

Noch allgemeiner kann das Rohr ein Rohrregister ausbilden oder ein Teil hiervon sein.

Das Wärmetauscherrohr ist insbesondere als Rohrkörper ausgebildet, was beispielsweise als klare Abgrenzung zu einem Kanal zu sehen ist, welcher z. B. zwischen zwei Platten gebildet wird oder ähnliches.

Ein solcher Rohrkörper wird typischerweise zunächst als Rohrstange hergestellt und danach in die gewünschte Endform gebogen.

Das Wärmetauscherrohr kann einstückig-stoffschlüssig ausgebildet sein. Dies soll bedeuten, dass beispielsweise ein ganzer Rohrmäander aus einem einzigen Stück gefertigt werden kann, wozu typischerweise ein zunächst gerades Rohr in eine Mäanderform gebogen wird.

Selbstverständlich sind anstelle einer Mäanderform aber auch andere Formen wie Kreisbogenformen oder Harfenformen oder ähnliches realisierbar.

Typischerweise besteht ein Wärmetauscherrohr aus Kupfer. Es kann aber auch ein anderes geeignetes Material für das Rohr gewählt werden, beispielsweise Edelstahl oder ähnliches. Auch Kunststoffrohre sind von der Erfindung optional nicht explizit ausgeschlossen.

Insbesondere können zwei Rohre aus unterschiedlichen Materialien in Reihe geschaltet sein.

Das Wärmetauscherrohr kann ein- oder mehrwandig ausgebildet sein. Insbesondere kann ein einwandiges Rohr mit einem mehrwandigen (Koaxial-)Rohr kombiniert werden, insbesondere in Reihe.

Insbesondere kann das Wärmetauscherrohr als (mehrwandiges) Sicherheitsrohr ausgebildet sein, um die Kontamination von Trink- und Abwasser zu verhindern.

Sind mehrere Wärmetauscherrohre vorhanden, sind diese typischerweise sämtlich auf derselben Seite des Bereichs des Körpers angeordnet.

Bei dem Bereich handelt es sich um einen im Wesentlichen flächenhaften Bereich eines Körpers.

Der im Wesentlichen flächenhafte Bereich kann hierbei vorteilhafterweise plan ausgebildet sein. Insbesondere ist aber auch ein beispielsweise schalenhafter (dreidimensionaler) flächenhafter Bereich von dieser Bezeichnung umfasst. In diesem Sinne soll der Bereich eine glatte Oberfläche aufweisen.

Der Körper kann dabei typischerweise ebenfalls flächenhaft ausgebildet sein. Der Bereich kann entweder nur einen Teilbereich des Körpers ausbilden oder den ganzen Körper.

Bei dem Körper kann es sich beispielsweise um eine Duschtasse, eine Duschwanne, eine Badewanne, eine Spüle oder ähnliches handeln, typischerweise also eine Einheit, auf welcher bereits erwärmtes Nutzwasser aufgefangen bzw. aufgetragen und/oder abgeleitet wird. Mithin kann es sich um Körper für den Privathaushalt handeln, alternativ um Körper für den öffentlichen Bereich oder gar für die Industrie. In diesem Sinne kann der Körper auch Wannen oder Becken in Maschinen oder für Maschinen betreffen. Beispielhaft sei hier ein Körper für Emulsionsbäder bei Maschinen oder ähnliches genannt. Auch ein Gärbehälter in einer Brauerei oder ähnliches kann gemäß einer Ausgestaltung der Erfindung als Körper aufgefasst werden (was insbesondere zeigt, dass dieser nicht plan ausgebildet sein muss; ein erfindungsgemäßes Wärmetauscherrohr kann sich in diesem Fall beispielsweise entlang der Mantelfläche eines solchen Körpers - dreidimensional - erstrecken).

Der Körper kann insbesondere auch einen Abfluss oder einen Durchlass oder ähnliches aufweisen.

Typischerweise hat ein derartiger Körper in der Regel zentral oder mittig einen im Wesentlichen flächenhaften Bereich.

Im Wesentlichen flächenhaft bedeutet im Sinne der Erfindung, dass der Bereich mehr oder weniger flächenhaft ausgebildet ist und von einem Betrachter als flächenhaft bezeichnet werden würde. Diese Definition ist aber nicht im mathematisch strengen Sinne gemeint, so dass die Bezeichnung "im Wesentlichen" eingefügt wurde, um beispielsweise leichte Wölbungen, Erhebungen, Rücksprünge oder ähnliches mit zu umfassen, welche den Gesamtcharakter des Bereichs als "im Wesentlichen flächenhaft" aber nicht ändern.

Das Wärmetauscherrohr ist mit dem Körper typischerweise verbunden und mit diesem zusammen als Baueinheit ausgestaltet. Mithin kann die Vorrichtung als vormontierte Baueinheit vertrieben werden. In diesem Sinne kann beispielsweise eine Duschtasse vorgesehen sein, auf deren Unterseite bereits ein oder mehrere Wärmetauscherrohre installiert sind.

Alternativ zu einer Ausgestaltung des Körpers als Duschtasse oder ähnliches, kann der Körper auch lediglich als Montageplatte ausgebildet sein, welche insbesondere dazu geeignet ist, an einem der oben beschriebenen Körper montiert, beispielsweise verklebt zu werden.

So kann in einem solchen Ausführungsbeispiel der Körper im Sinne der Erfindung eine einfache Montageplatte sein, welche gemeinsam mit dem an ihm festgelegten Wärmetauscherrohr(en) vertrieben wird.

Eine solche Baueinheit kann dann in einem späteren Arbeitsschritt an einem anderen Körper montiert werden. Beispielsweise kann die Montageplatte hierzu eine Klebefläche aufweisen (typischerweise an der dem Wärmetauscherrohr abgewandten Seite), welche beispielsweise von einer Schutzfolie abgedeckt wird, um einen ungehinderten Transport zu ermöglichen.

An einem anderen Ort, beispielsweise dem Montageort einer Dusche oder Spüle oder ähnlichem, kann die erfindungsgemäße Vorrichtung, bei welcher der Körper als Montagefläche ausgebildet ist, dann an einem anderen entsprechenden Körper (wie einer Duschtasse oder einer Spüle) verklebt oder montiert werden. Dies erlaubt insbesondere eine Nachrüstbarkeit eines entsprechenden Körpers (wie einer Duschtasse oder Spüle oder ähnlichem).

Eine derartige Vorrichtung kann beispielsweise aber auch an einer herkömmlichen Fliese verklebt werden, wie sie beispielweise im Bodenbereich einer Dusche vorgesehen werden soll oder aber der Körper der erfindungsgemäßen Vorrichtung ist bereits eine solche Fliese (so dass das Wärmetauscherrohr - z. B. mittels einer Entkopplungsmatte - bereits fabrik- oder montageseitig an dieser Fliese befestigt werden kann).

Insgesamt dient die Vorrichtung also einer Wärmerückgewinnung bei Nutzwasser, wobei es sich typischerweise um Nutzwasser handelt, welches von einem Nutzer zum Duschen oder zum Spülen (beispielsweise für Geschirr) oder ähnliches genutzt wird.

Gemäß einer besonders vorteilhaften Ausgestaltung der Erfindung erstreckt sich das Wärmetauscherrohr (nahezu) ausschließlich entlang der genannten Ebene. Mit anderen Worten erfährt das Wärmetauscherrohr keine Richtungsänderung in eine dritte Richtungsdimension, sondern führt Richtungsänderungen nur in besagter Ebene aus (auch wenn es sich bei einem Rohr definitionsgemäß natürlich immer um einen dreidimensionalen Körper handelt). Ausgenommen hiervon können aber beispielsweise abknickende Anschlussenden sein.

Vorteilhafterweise kann das Rohr beispielsweise als Mäander oder Kreisbogen oder ähnliches ausgebildet sein.

Gemäß einer besonders bevorzugten Ausgestaltung der Erfindung liegt das Wärmetauscherrohr an dem Bereich des Körpers an und ist an diesem festgelegt. Mithin kontaktiert es den Körper unmittelbar.

Das Wärmetauscherrohr kann also satt an dem Bereich (des Körpers) anliegen.

Die Kontaktierung liegt dabei insbesondere durchgehend vor oder über große Längenbereiche des Rohres (ist dieses beispielsweise als Rohrmäander ausgebildet, können die bogenförmigen Abschnitte auch von dem Bereich abstehen oder ähnliches).

Bevorzugterweise ist das Wärmetauscherrohr mit mindestens einem Wärmeleitelement an dem Bereich festgelegt.

Insbesondere können sogenannte Wärmeleitbleche vorgesehen sein, welche Abschnitte des Rohres, beispielsweise die geraden Abschnitte eines Rohrmäanders, übergreifen können und mit ihren Flügeln an dem im Wesentlichen flächenhaften Bereich befestigt sind (insbesondere verklebt oder verschweißt oder ähnliches).

Alternativ kann das Wärmetauscherrohr beispielsweise über ein Wärmeleitelement an dem Bereich festgelegt sein, welches sich zwischen dem Bereich und dem Rohr befindet, also ein Wärmeleitelement nach Art eines Aufsatzelementes, an welchem das Rohr beispielsweise verschweißt wird oder ähnliches.

Insbesondere sind aber auch Ausführungsformen geschützt, welche auf ein Wärmeleitelement verzichten, bei welchen das Rohr beispielsweise an dem Bereich direkt verschweißt ist.

Bei dem Wärmetauscherrohr, welches an dem Bereich anliegt, kann es sich insbesondere um einen - vorzugsweise abgerundeten oder geometrieoptimierten - (flachen) Rohrmäander oder ein Rohrregister handeln, da ein solcher zur flächigen Kontaktierung des Bereiches besonders gut geeignet ist.

Gemäß einem weiteren besonders bevorzugten Ausführungsbeispiel ist das Wärmetauscherrohr beabstandet von dem Bereich angeordnet.

Insbesondere kann dies für eine Ausführungsform genutzt werden, bei welcher ein erstes Wärmetauscherrohr an dem Bereich (unmittelbar) anliegt und ein zweites Wärmetauscherrohr in einer (zweiten) Ebene angeordnet ist, welche von dem Bereich beabstandet ist. Mithin können in einem solchen Ausführungsbeispiel beide Wärmetauscherrohre hinsichtlich ihrer Ausrichtungsebene parallel angeordnet sein, bzw. in versetzten Ebenen angeordnet sein.

Erfindungsgemäß kann vorgesehen sein, dass das Wärmetauscherrohr als Koaxialrohr oder Mehrkanalrohr (z. B mit Leckageüberwachungsfunktion) ausgebildet ist.

Der Vorteil einer derartigen Ausgestaltung ist, dass das Rohr zwei voneinander getrennte Kanäle aufweisen kann, einen für das abfließende, verbrauchte, noch gewärmte Wasser und einen für das ankommende, noch nicht erwärmte Frischwasser (unabhängig davon, ob es sich um ein Koaxialrohr oder ein anderes Rohr mit mehreren separaten Kanälen handelt).

Anwendungsbedingt kann ein Sicherheitsrohr zur Leckageüberwachung eingesetzt werden.

Das Wärmetauscherrohr kann mindestens zwei voneinander getrennte Kanäle aufweisen, unabhängig davon ob es ein Koaxialrohr ist, beispielsweise sofern es zwei Kanäle aufweist, welche nebeneinander angeordnet sind. Solche Rohre werden im Sinne der vorliegenden Erfindung vorteilhafterweise auch als Koaxialrohr verstanden.

Ein derartiges Wärmetauscherrohr kann insbesondere nach dem Gegenstromprinzip funktionieren (ein erstes Fluid kann eine erste Richtung eines ersten Kanals des Rohres entlanglaufen und ein zweites Fluid in entgegengesetzter Richtung entlang des anderen Kanals des Rohres).

Gemäß einer besonders vorteilhaften Ausgestaltung der Erfindung kann ein derartiges Wärmetauscherrohr insbesondere als Siphon (z. B. an einer Spüle oder ähnliches) ausgebildet sein.

Vorzugsweise ist ein derartiges Rohr kreisbogenförmig ausgebildet und/oder von dem Bereich beabstandet angeordnet.

Insbesondere kann ein derartiges Koaxialrohr mit einem Abfluss der Vorrichtung verbunden sein.

Gemäß einer besonders vorteilhaften Ausführungsform der Erfindung liegt das Wärmetauscherrohr in Mäanderform vor. Liegt es in einer derartigen Form vor, kann es insbesondere an dem Bereich des Körpers anliegen.

Alternativ kann das Rohr beispielsweise in Kreisbogenform vorliegen, insbesondere wenn es von dem Bereich beabstandet angeordnet ist.

Gemäß der bevorzugsten Ausführungsform sind sowohl ein Wärmetauscherrohr in Mäanderform als auch ein (Koaxial-) Wärmetauscherrohr in Kreisbogenform vorhanden, welche insbesondere strömungstechnisch in Reihe geschaltet sind.

Erfindungsgemäß kann vorgesehen sein, dass die Vorrichtung ein Wärmetauscherrohr eines ersten Typs und ein Wärmetauscherrohr eines zweiten Typs aufweist. Die Typen können sich beispielsweise hinsichtlich ihres Aufbaus, ihrer Form, ihres Materials und/oder ihres Abstandes zum Bereich hin unterscheiden.

Beispielsweise kann ein erstes Rohr in Form eines Rohrmäanders vorgesehen sein, welches an dem Bereich anliegt und aus Kupfer besteht. Des Weiteren kann ein zweites Wärmetauscherrohr vorgesehen sein eines zweiten Typs, welches beispielsweise als Koaxialrohr ausgebildet ist und von dem Bereich beabstandet ist (und aus Kupfer oder Edelstahl besteht).

Diese unterschiedlichen Typen von Rohren können insbesondere strömungstechnisch in Reihe geschaltet sein.

Eine derartige Ausgestaltung ermöglicht die Kombination unterschiedlicher Effekte, nämlich einmal, hinsichtlich des beschriebenen ersten Typs, die Erhitzung des ankommenden Wassers nach Art eines Flächenwärmetauschers über die auf der anderen Seite des Körpers aufgefangene oder abgeleitete Wassermenge, und andererseits eine zusätzliche Erwärmung des ankommenden Wassers durch besagtes Wasser, welches jedoch auf die andere Seite des Körpers gelangt ist und abfließt (nämlich im Koaxialrohr).

Vorteilhafterweise wird das zu erwärmende Frischwasser zuerst durch das Koaxialrohr geleitet, um einen Kühleffekt für den Körper (z. B. die Duschtasse) zu verhindern.

Gemäß einer besonders bevorzugten Ausführungsform der Erfindung weist die Vorrichtung einen Zufluss zum Wärmetauscherrohr für Nutzwasser auf. Es kann sich hierbei grundsätzlich um das verbrauchte Nutzwasser oder um Frischwasser handeln. Insbesondere ist damit aber zunächst das verbrauchte Nutzwasser gemeint, welches von einer gegenüberliegenden Seite des Bereiches bzw. des Körpers zum Wärmetauscherrohr gelangen kann, insbesondere sofern dieses als Koaxialrohr ausgebildet ist.

Die Leitung des Nutzwassers von der einen Seite des Körpers auf die andere Seite des Körpers kann beispielsweise durch den Körper hindurch erfolgen, insbesondere nach Art einer Öffnung bzw. eines Abflusses, oder alternativ um den Körper herum, beispielsweise über eine Ablaufrinne oder ähnliches, welche dann auf der Rohrseite des Körpers mit dem Wärmetauscherrohr bzw. den Wärmetauscherrohren verbunden ist.

Wie oben bereits beschrieben, kann der Körper als Sanitärkörper, beispielsweise nach Art einer Duschtasse, einer Duschwanne, einer Wanne, einer Spüle oder ähnliches ausgebildet sein, so dass die Vorrichtung als "fertiges" Produkt angeboten werden kann.

Alternativ kann der Körper aber auch als Trägerplatte ausgebildet sein, welche zur Erweiterung eines bestehenden Sanitärkörpers genutzt werden kann.

Im letztgenannten Fall kann an der Trägerplatte eine Klebeschicht sowie eine die Klebeschicht abdeckende Schutzschicht vorhanden sein.

Dies ermöglicht insbesondere ein erfindungsgemäßes Verfahren, bei welchem eine solche Vorrichtung, bei der der Körper lediglich als Trägerplatte ausgebildet ist, an einem ersten Ort hergestellt wird (beispielsweise der Montagehalle des Anbieters), und danach an einen zweiten Ort verbracht wird.

An diesem zweiten Ort kann die Vorrichtung dann an einem separaten (Sanitär-)Körper, wie einer Duschtasse oder ähnlichem, befestigt werden. Dies kann beispielsweise durch ein Verkleben erfolgen, insbesondere mit besagter Klebeschicht, welche an der Vorrichtung bereits vorgesehen ist.

Die der Erfindung zugrundeliegende Aufgabe wird außerdem mit einem Verfahren zur Wärmerückgewinnung bei Nutzwasser gelöst, gemäß welchem Nutzwasser durch mindestens ein Wärmetauscherrohr unterhalb eines Körpers mit einem im Wesentlichen flächenhaften Bereich geleitet wird. Dieser Aspekt der Erfindung ist dadurch gekennzeichnet, dass das mindestens eine Wärmetauscherrohr entlang einer zur Haupterstreckungsebene des Bereichs nicht orthogonalen Ebene ausgerichtet ist.

An dieser Stelle sei angemerkt, dass sämtliche in Verbindung mit den erfindungsgemäßen Vorrichtungen beschriebenen Vorteile und Merkmale analog auch auf die beschriebenen und beanspruchten Verfahren übertragbar sein sollen und umgekehrt. Eine Wiederholung erfolgt lediglich aus Gründen der Übersichtlichkeit der Anmeldung an dieser Stelle nicht.

Selbstverständlich soll aber beispielsweise auch ein Verfahren offenbart sein, bei welchem das verbrauchte Nutzwasser zunächst durch ein Wärmetauscherrohr eines ersten Typs geleitet wird und anschließend durch ein Wärmetauscherrohr eines zweiten Typs.

Weitere Vorteile der Erfindung ergeben sich aus den nicht zitierten Unteransprüchen sowie aus der nachfolgenden Beschreibung der in den Figuren dargestellten Ausführungsbeispiele. Darin zeigen:
- Fig. 1: in einer sehr schematischen seitlichen Ansicht ein als Dusche ausgebildetes Nutzwassersystem, unter Darstellung eines Duschkopfes, einer Mischbatterie, eines Heizers sowie einer Duschtasse mit einem herkömmlichen Ablauf, mithin eine Vorrichtung des Standes der Technik,
- Fig. 2: in einer Ansicht gemäß Fig. 2 ein entsprechendes System mit einer erfindungsgemäßen Vorrichtung, bei welchem eine Duschtasse den Körper der Vorrichtung darstellt und weitere Elemente der Vorrichtung durch einen gestrichelten Kasten angedeutet sind, unter zusätzlicher Andeutung von als Pfeilen ausgebildeten Leitungen,
- Fig. 3: in einer sehr schematischen, isometrischen Schrägaufsicht eine erfindungsgemäße Vorrichtung, bei welcher der Körper nach Art einer Duschtasse ausgebildet ist, mit einem Abfluss und einem lediglich angedeuteten, da verdeckt dargestellten, Wärmetauscherrohr,

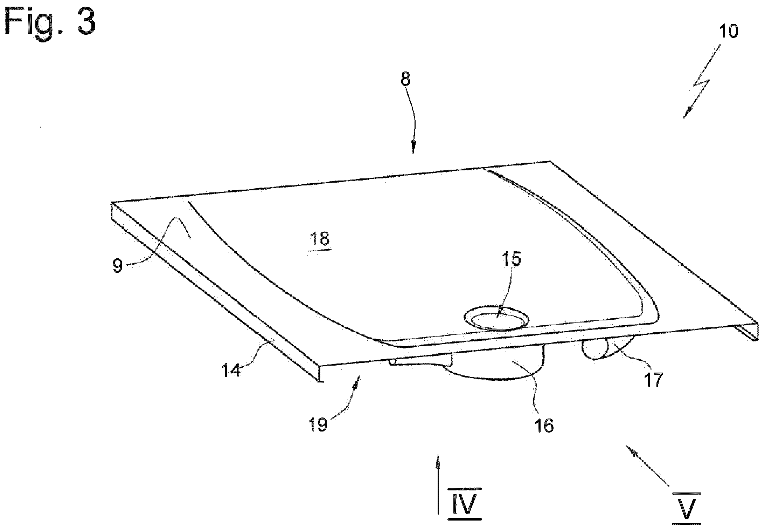

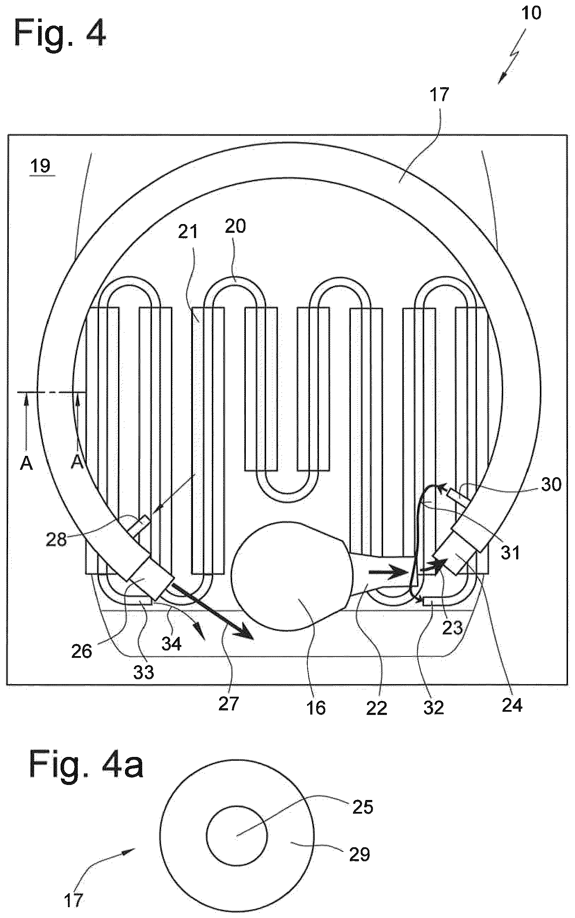

- Fig. 4: in einer sehr schematischen Unteransicht, etwa gemäß Ansichtspfeil IV in Fig. 3, die Unterseite der erfindungsgemäßen Vorrichtung gemäß Fig. 3, unter Darstellung eines an der Unterseite des als Duschtasse ausgebildeten Körpers angebrachten Wärmetauscherrohres eines ersten Typs, welches als Rohrmäander ausgebildet ist, und unter Andeutung eines Wärmetauscherrohres eines zweiten Typs, welches als Koaxialrohr in Bogenform ausgebildet ist, unter zusätzlicher Darstellung eines Abflusses, jedoch unter Fortlassung weiterer Verbindungsmittel, welche insbesondere die beiden Wärmetauscherrohre und den Abfluss verbinden würden,
- Fig. 4a: ein sehr schematischer Querschnitt durch das Koaxialrohr gemäß Fig. 4, etwa entlang einer in Fig. 4 mit AA bezeichneten Schnittlinie,
- Fig. 5: die erfindungsgemäße Vorrichtung gemäß den Fig. 3 und 4, in einer sehr schematischen Seitenansicht, etwa gemäß Ansichtspfeil V in Fig. 3, unter Darstellung der unterschiedlichen Ebenen, in welchen die beiden Wärmetauscherrohre angeordnet sind,
- Fig. 6a: ein zweites Ausführungsbeispiel der Erfindung, in einer schematischen Seitenansicht, etwa gemäß Fig. 5, bei welchem der Körper als Trägerplatte ausgebildet ist, mit einer daran angeordneten Klebeschicht samt Schutzschicht,
- Fig. 6b: in einer Ansicht gemäß Fig. 6a die entsprechende Vorrichtung bei teilweise abgezogener Schutzschicht,
- Fig. 6c: die Vorrichtung gemäß Fig. 6b in einer entsprechenden Ansicht, während des Heranführens an die Unterseite eines separaten Körpers in Form einer Duschtasse,
- Fig. 6d: die Vorrichtung gemäß Fig. 6c samt Duschtasse in einem vollständig befestigten Zustand, und
- Fig. 7: in einer sehr schematischen seitlichen Schrägansicht ein letztes Ausführungsbeispiel, bei welchem das Wärmetauscherrohr als Siphon einer Spüle sowie als Koaxialrohr ausgebildet ist.

Ausführungsbeispiele der Erfindung sind in der nachfolgenden Figurenbeschreibung, auch unter Bezugnahme auf die Zeichnungen, beispielhaft beschrieben. Dabei werden der Übersichtlichkeit halber - auch soweit unterschiedliche Ausführungsbeispiele betroffen sind - gleiche oder vergleichbare Teile oder Elemente oder Bereiche mit gleichen Bezugszeichen, teilweise unter Hinzufügung kleiner Buchstaben, Zahlen und/oder Apostrophen, bezeichnet. Gleiches gilt für die der Figurenbeschreibung nachfolgenden Patentansprüche.

Merkmale, die nur in Bezug zu einem Ausführungsbeispiel beschrieben sind, können im Rahmen der Erfindung auch bei jedem anderen Ausführungsbeispiel der Erfindung vorgesehen werden. Derartig geänderte Ausführungsbeispiele sind - auch wenn sie in den Zeichnungen nicht dargestellt sind - von der Erfindung mitumfasst.

Alle offenbarten Merkmale sind für sich erfindungswesentlich. In die Offenbarung der Anmeldung wird hiermit auch der Offenbarungsinhalt der gegebenenfalls zugehörigen Prioritätsunterlagen (Abschrift der Voranmeldung) sowie der gegebenenfalls zitierten Druckschriften und der beschriebenen Vorrichtungen des Standes der Technik vollinhaltlich mit einbezogen, auch zu dem Zweck, einzelne oder mehrere Merkmale dieser Unterlagen in einen oder in mehrere Ansprüche der vorliegenden Anmeldung mit aufzunehmen.

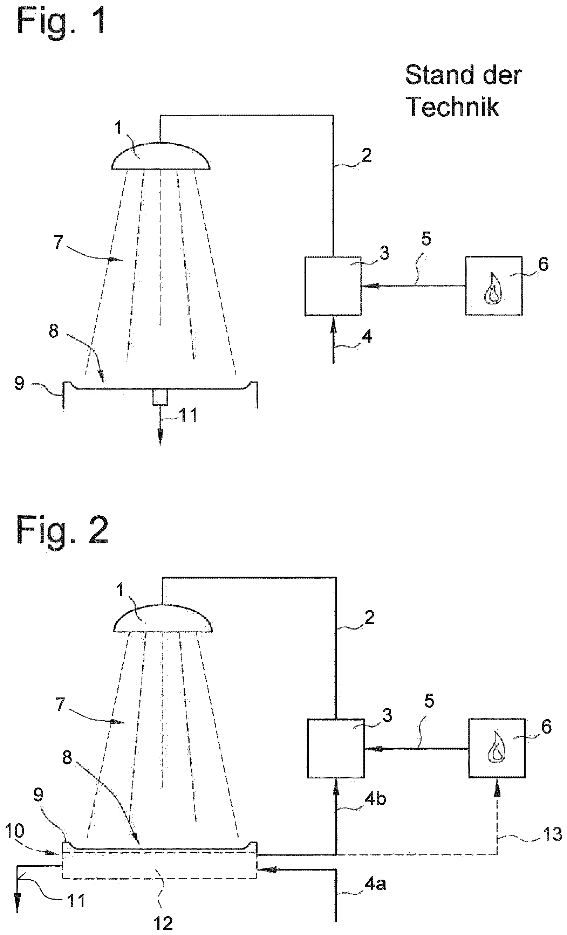

Fig. 1 zeigt zunächst, zur Verdeutlichung, ein herkömmliches Duschsystem des Standes der Technik: So ist dort ein herkömmlicher Duschkopf 1 über eine Zuleitung 2 mit einer Mischbatterie 3 verbunden, welche lediglich schematisch angedeutet ist. An ihr kann ein Nutzer die Temperatur des aus dem Duschkopf 1 austretenden Wassers regeln, insbesondere mit Hilfe einer Armatur.

Der Mischbatterie 3 wird über eine Leitung 4 einerseits ungewärmtes Frischwasser zugeführt und über eine Leitung 5 andererseits bereits mit Hilfe eines Brenners, eines Boilers oder einer Therme 6 oder ähnlichem erhitztes Wasser einer hohen Temperatur, beispielsweise in Höhe von 80°C.

Hat ein Nutzer über die Mischbatterie 3 die gewünschte Wassertemperatur eingestellt, kann er das in der gewünschten Temperatur aus dem Duschkopf 1 austretende Nutzwasser 7 zur Reinigung nutzen, welches Nutzwasser 7 sich dann im zentralen Bereich 8 einer Duschtasse 9 sammeln bzw. über diese ablaufen kann.

Gemäß dem System des Standes der Technik nach Abbildung 1 kann das verbrauchte Nutzwasser 7 die Duschtasse 9 über ein senkrecht angeordnetes Fallrohr 11 verlassen, ohne dass dessen noch gespeicherte Wärme in irgendeiner Form genutzt wird.

Hingegen zeigt das erfindungsgemäße System gemäß Fig. 2 eine erfindungsgemäße Vorrichtung 10 zur Wärmerückgewinnung des Nutzwassers, umfassend eine Duschtasse 9 sowie weitere, unterhalb der Duschtasse 9 angeordnete Bauteile der Vorrichtung (insbesondere Wärmetauscherrohre), welche in Fig. 2 aber noch nicht im Detail dargestellt sind, so dass dieser Bereich in Fig. 2 lediglich gestrichelt angedeutet wird und mit dem Bezugszeichen 12 versehen ist.

Wie Fig. 2 zeigt, besteht auch hier eine Ableitung 11 nach Art eines Fallrohres. Jedoch besteht der entscheidende Unterschied darin, dass die Leitung 4, also die Zuleitung für frisches Nutzwasser, aufgeteilt ist in eine Zuleitung 4a und eine Weiterleitung 4b. Das frische Nutzwasser wird demnach zunächst über die Zuleitung 4a in den Bereich 12 geleitet und dort von dem verbrauchten Nutzwasser 7 in einer später noch beschriebenen Art und Weise vorerwärmt.

Das dann bereits leicht vorerwärmte Nutzwasser kann von dem Bereich 12 anschließend über die Weiterleitung 4b auf herkömmliche Weise zur Mischbatterie 3 gelangen und optional (und daher gestrichelt dargestellt) über eine vergabelte Weiterleitung 13 ebenfalls zum Brenner 6 bzw. der Therme.

Auf diese Weise kann mit dem in Fig. 2 dargestellten System und der erfindungsgemäßen Vorrichtung 10 erreicht werden, dass der Mischbatterie 3 nicht nur (wie im Stand der Technik) stark erhitztes sowie überhaupt nicht erhitztes Wasser zugeleitet wird, sondern vielmehr stark erhitztes Wasser (nämlich über die Leitung 5) und leicht erwärmtes Wasser (nämlich über die Leitung 4b).

Will der Nutzer bei beiden dargestellten Systemen nun eine gleiche, vorgegebene Gesamttemperatur von beispielsweise 36°C einstellen, so benötigt er zum Erzielen dieser Gesamttemperatur gemäß Fig. 2 weniger stark erhitztes Wasser aus der Leitung 5.

Optional benötigt er, durch eine Verbindung über die Leitung 13, weniger Energie im Bereich des Brenners, Boilers bzw. der Therme 6, um das von der Therme 6 über die Leitung 5 bereitgestellte Wasser auf die Höchsttemperatur von 60-80°C zu bringen (da das Wasser aus der Leitung 13 ja bereits leicht vorgewärmt ist).

Wie dieses Ziel erreicht werden kann, zeigen die nachfolgenden Figuren.

Darin zeigt Fig. 3 zunächst eine sehr schematische, isometrische Schrägaufsicht auf die Oberseite 18 der erfindungsgemäßen Vorrichtung 10 bzw. auf die Oberseite 18 der in Fig. 2 bereits dargestellten Duschtasse 9 bzw. auf die Oberseite 18 des im Wesentlichen flächigen Bereiches 8 der Duschtasse 9.

Die in Fig. 2 durch den Kasten 12 angedeuteten Elemente sind in Fig. 3 ebenfalls noch kaum sichtbar, was in der Natur der Art der isometrischen Aufsicht begründet liegt.

Fig. 3 lässt aber bereits erkennen, dass der Körper 9 nach Art einer Duschtasse neben dem im Wesentlichen flächenhaften, zentralen Bereich 8 auch noch randseitige Kragen 14 vorsieht. Diese bilden zusammen mit dem Bereich 8 den Körper 9 bzw. die Duschtasse aus.

Auf der Oberseite 18 der Durchtasse 9 kann sich bei gebrauchsgemäßer Nutzung (in einer Dusche) verbrauchtes Nutzwasser sammeln, welches dann über eine Öffnung 15 in der Duschtasse 9 nach Art eines Abflusses abgeleitet werden kann. Dieses ablaufende, verbrauchte Nutzwasser gelangt dann in ein unterhalb des Bereiches 8 angeordnetes, ablaufartiges Abflusselement 16.

Zusätzlich zu dem Abflusselement 16 lässt Fig. 3 bereits erkennen, dass an der Unterseite 19 der Vorrichtung 10 bzw. der Duschtasse 9 bzw. des Bereiches 8 auch ein Wärmetauscherrohr 17 angeordnet ist, welches insbesondere als Koaxialrohr ausgebildet ist.

Ein Blick auf Fig. 4 verdeutlicht die Bauelemente, welche auf der Unterseite 19 der Vorrichtung 10 bzw. der Duschtasse 9 bzw. des Bereiches 8 angeordnet sind:

So lässt sich erkennen, dass ein Fortsatz 22 des Abflusselementes 16 das verbrauchte Nutzwasser entlang eines Pfeils 23 zu einem Einlass 24 des Koaxialrohres 17 leitet.

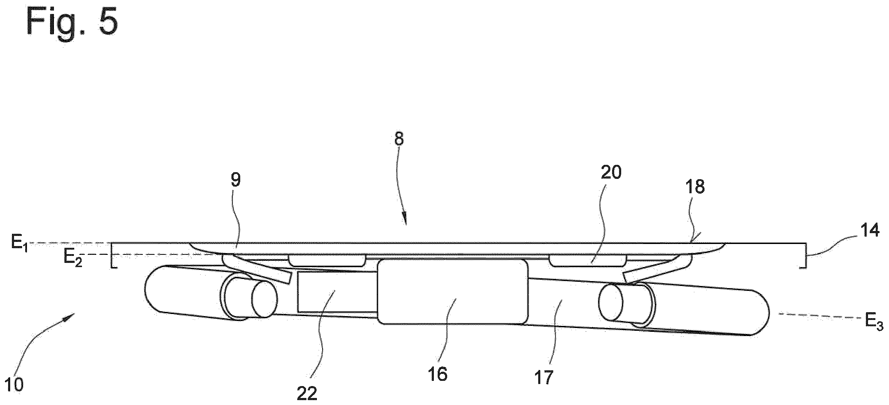

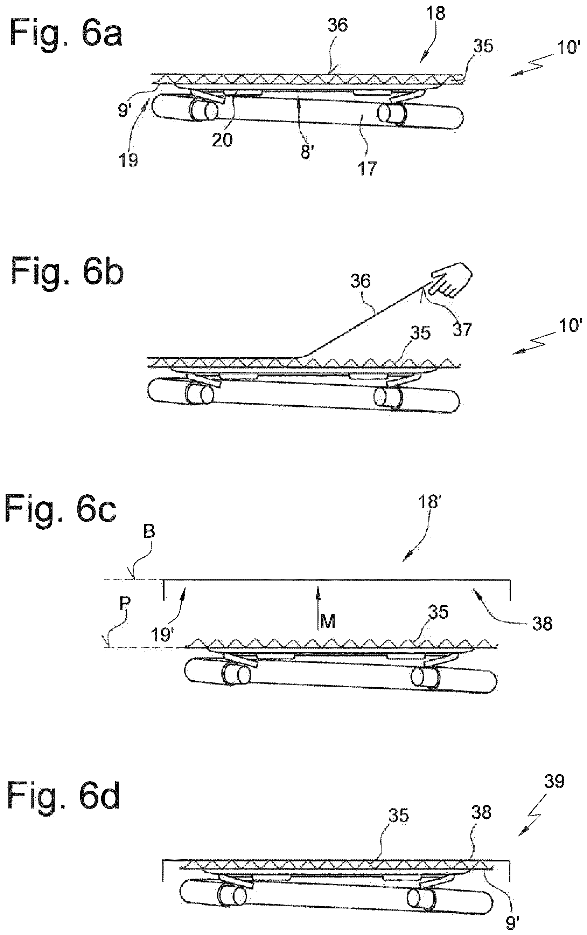

An dieser Stelle sei darauf hingewiesen, dass insbesondere in Fig. 4, aber auch in den später noch beschriebenen Fig. 5 und 6 und der bereits beschriebenen Fig. 3, nicht sämtliche Anschlusselement dargestellt sind, was insbesondere der Übersichtlichkeit der Zeichnungen dienen soll. Die Leitungsrichtungen und Leitungswege werden daher üblicherweise mit Pfeilen bezeichnet und entsprechende Leitungsstücke, wie Schläuche, Verbindungsstücke oder ähnliches, können sich dazugedacht werden.

Jedenfalls wird das verbrauchte Nutzwasser somit von der Oberseite 18 der Vorrichtung 10 über die Öffnung 15 und das Abschlusselement 16 in das Koaxialrohr 17 eingeleitet, und zwar in einen zentralen Kanal 25, wie der in Fig. 4a separat dargestellte, sehr schematische Schnitt durch das Koaxialrohr 17 andeutet.

Ausweislich der Hauptzeichnung Fig. 4 ist das Koaxialrohr 17 dabei im Wesentlichen kreisbogenförmig ausgebildet und erstreckt sich über einen Bogen, welcher etwa oder etwas mehr als 270° eines Kreises abdeckt. Dies ist allerdings nur exemplarisch zu verstehen, und die Geometrie kann dem Bauraum angepasst sein.

Das verbrauchte Nutzwasser kann das Koaxialrohr 17 an einem Auslass 26 nach Durchströmen des Koaxialrohres 17 verlassen und entlang des Pfeils 27 zu dem in Fig. 2 dargestellten Fallrohr 11 abgeleitet werden.

Das verbrauchte Nutzwasser kann somit vor Ableitung durch das Fallrohr 11 eine Spezialfunktion erfüllen, indem es (der Vorrichtung 10 über die in Fig. 2 mit 4a bezeichnete Leitung zugeführtes) frisches, noch ungewärmtes Nutzwasser vorerwärmen kann.

Dieses frische, noch ungewärmte Nutzwasser wird nämlich über die Leitung 4a gemäß Fig. 2 über einen Einlass 28 einem äußeren Kanal 29 (vgl. Fig. 4a) des Koaxialrohres 17 zugeleitet.

Das zunächst noch unerwärmte Frischwasser durchläuft das Koaxialrohr 17 somit in einem koaxialen Kanal 29 und zwar typischerweise entgegen der Leitungsrichtung des verbrauchten Nutzwassers. Hierbei kann das verbrauchte Nutzwasser das Frischwasser teilweise vorerwärmen.

Um das nunmehr vorerwärmte Frischwasser noch weiter zu erwärmen sieht die erfindungsgemäße Vorrichtung 10 eine weitere Besonderheit vor:
So ist zusätzlich zu dem Wärmetauscherrohr 17 ein weiteres Wärmetauscherrohr 20 vorgesehen.

Das Wärmetauscherrohr 20 ist nach Art eines Rohrmäanders ausgebildet und liegt an dem Körper 9 bzw. dem Bereich 8 bzw. der Unterseite 19, insbesondere unmittelbar, an.

Der Rohrmäander 20 kann insbesondere aus Kupfer bestehen und/oder abschnittsweise gerade und gebogene Rohrabschnitte aufweisen.

In dem dargestellten Ausführungsbeispiel ist der Rohrmäander 20 mit Hilfe von Wärmeleitelementen 21 an dem Bereich 8 bzw. der Unterseite 19 bzw. dem Körper 9 festgelegt.

Bei den Wärmeleitelementen 21 kann es sich beispielsweise um streifenartige Wärmeleitbleche handeln, welche insbesondere die geraden Abschnitte des Rohrmäanders 20 übergreifen und ansonsten an der Unterseite 19 des Bereiches 8 verklebt sind.

Alternativ, aber nicht dargestellt, könnte der Rohrmäander 20 aber auch mit Hilfe anderer Wärmeleitelemente oder ohne Wärmeleitelemente an dem Bereich 8 festgelegt, beispielsweise festgeschweißt, sein.

Das Wärmetauscherrohr 20 nach Art eines Rohrmäanders ermöglicht eine Wärmerückgewinnung nunmehr auf folgende Art:
So kann das bereits leicht vorerwärmte Frischwasser das Koaxialrohr 17 über einen Ausgang 30 verlassen und entlang eines Pfeils 31 (über nicht dargestellte Verbindungselemente) einem Eingang 32 des Rohrmäanders 20 zugeführt werden.

Das Frischwasser kann den Rohrmäander 20 auf diese Weise durchfließen und hierbei von dem sich auf der anderen Seite des Bereiches 8 befindlichen, verbrauchten Nutzwasser nach Art eines Flächenwärmetauschers weiter erwärmt werden.

Auch wird beim Duschvorgang die Duschtasse 9 bzw. der Bereich 8 vorerwärmt, so dass auch die in diesem Körper bzw. Bereich gespeicherte Wärme einer weiteren Erhitzung des in den Rohrmäander 20 geleiteten Frischwassers dienen kann.

Das somit nunmehr weiter erwärmte Wasser kann den Rohrmäander 20 dann an einem Auslass 33 verlassen und (über nicht dargestellte Leitungsmittel) entlang des Pfeils 34 der in Fig. 2 dargestellten Leitung 4b (und/oder 13) zugeleitet werden.

Mithin verdeutlicht Fig. 4 somit eine Doppelstufe der Wärmerückgewinnung für ankommendes Frischwasser mit Hilfe zweier in Reihe geschalteter Wärmetauscherrohre 17 und 20 unterschiedlichen Typs.

Die unterschiedliche Anordnung der beiden Wärmetauscherrohre 17 und 20 unterschiedlichen Typs verdeutlicht dann Fig. 5: Hier ist die erfindungsgemäße Vorrichtung 10 in einer sehr schematischen Seitenansicht zu sehen, etwa entlang Ansichtspfeil V in Fig. 3.

Während der Rohrmäander 20 an dem Bereich 8 der Duschtasse 9, insbesondere unmittelbar, anliegt und sich die Ebene E₂, in welcher der Rohrmäander 20 ausgerichtet ist, somit nahe bei der Haupterstreckungsebene E₁ des Bereiches 8 befindet und parallel zu dieser ausgerichtet ist, befindet sich die Ebene E₃, entlang welcher das Koaxialrohr 17 ausgerichtet ist, etwas weiter beabstandet von der Ebene E₁ und der Ebene E₂, insbesondere unterhalb des Bereiches 8 bzw. des Körpers 9.

Fig. 5 verdeutlicht auch, dass die Ebene E₃ gegebenenfalls leicht verkippt zur Haupterstreckungsebene E₁ des Bereiches 8 ausgebildet sein kann, vorliegend jedoch in einem Verkippwinkel, welcher lediglich wenige Grad beträgt, jedenfalls weniger als 45°, insbesondere weniger als 20°.

Während Fig. 4 verdeutlicht, dass der Rohrmäander 20 mit Hilfe der Wärmeleitelemente 21 an dem Körper 9 festgemacht ist, lassen die Zeichnungen der Fig. 4 und 5 die Art der Anbringung des Koaxialrohres 17 am Körper 9 offen. Typischerweise reicht jedoch das Vorsehen der in Fig. 4 und 5 nicht dargestellten Verbindungselemente nach Art von Rohrstücken oder Schläuchen oder ähnlichem, um auch das Koaxialrohr 17 sicher und hinreichend an dem Körper 9 zu haltern. Gegebenenfalls können selbstverständlich aber auch separate Halterungsmittel wie Klebestreifen oder Befestigungsstege oder ähnliches vorgesehen sein, welche aber in den Zeichnungen nicht dargestellt sind, da diese optional sind. Hierbei kann es sich insbesondere um eine wärmedämmende Matrize handeln.

Fig. 6a zeigt abschließend eine weitere Ausführungsform einer erfindungsgemäßen Vorrichtung 10', etwa in einer Ansicht gemäß Fig. 5.

Fig. 6a verdeutlicht dabei zunächst, dass der Körper 9' gemäß diesem Ausführungsbeispiel nicht als Sanitärkörper, wie Duschtasse oder ähnliches, ausgebildet ist, sondern als eine herkömmliche Trägerplatte.

Mit anderen Worten sind die Bauteile, wie Koaxialrohr 17 oder Rohrmäander 20 nicht unmittelbar an einem Sanitärkörper angeordnet, sondern vielmehr an einer Trägerplatte 9', insbesondere an deren flächenhaftem Bereich 8'.

Auf der Oberseite 18 der Trägerplatte 9' ist eine Klebeschicht 35 angeordnet, welche von einer Schutzschicht 36, insbesondere vollflächig, abgedeckt wird. Die Schutzschicht 36 dient insbesondere einer einfachen Handhabung der Vorrichtung 10' und einem einfacheren Transport in dem Sinne, dass die Vorrichtung 10' nicht während eines Transportes mit einem anderen Gegenstand aufgrund der Klebeschicht 35 verklebt.

Die in Fig. 6b dargestellte Vorrichtung 10' befindet sich nun bereits an einem zweiten Ort, wobei es sich beispielsweise um den Montageort handeln kann, also beispielsweise den Gebäuderaum, in welchem eine Dusche oder eine Spüle oder eine Wanne oder ähnliches angebracht ist oder angebracht werden soll.

Alternativ kann die fertige Vorrichtung 10' von der Lokalität des Herstellers zunächst zu einer Lokalität eines Monteurs transportiert werden, welcher in der Nähe des Montageortes ansässig ist.

Jedenfalls kann ausweislich Fig. 6b an einem zweiten Ort, welcher vorteilhafterweise der Montageort ist, die Schutzschicht oder Schutzfolie 36 leicht manuell entfernt bzw. abgezogen werden. Auf diese Weise wird die Klebeschicht 35 der Vorrichtung 10' freigelegt. Ein Nutzer kann hierzu händisch eine Greiffläche 37 der Schutzschicht 36 hintergreifen.

Das Entfernen der Schutzschicht 36 gemäß Fig. 6b erfolgt vorzugsweise unmittelbar vor einem Verkleben der Vorrichtung 10' in oder an einem zweiten Körper 38, welcher beispielsweise als Duschtasse, Spüle, Wanne oder ähnliches ausgebildet sein kann.

Die Vorrichtung 10' kann bei abgezogener Schutzschicht 36 ausweislich Fig. 6c, insbesondere umfassend die freigelegte Klebeschicht 35, entlang einer Montagerichtung M an die Unterseite 19' des zweiten Körpers 38 angenähert und dort mit Hilfe der freigelegten Klebeschicht 35, insbesondere vollflächig, verklebt werden. Dieses Verkleben erfolgt dabei im Wesentlichen planparallel, indem die Plattenebene P planparallel an die Befestigungsebene B des zweiten Körpers 38 herangebracht wird, bis sie an dessen Unterseite 19' verklebt.

Hierzu sind in der Regel keine Werkzeuge, Hilfsmittel oder ähnliches notwendig. Ein Nutzer kann dies händisch erledigen, insbesondere indem er nach dem Auflegen der Vorrichtung 10' auf die Unterseite 19' des zweiten Körpers 38 Druck etwa entlang der Montagerichtung M auf die Trägerplatte 9' ausübt.

Ein fertiggestelltes, nachgerüstetes Produkt ist dann in Fig. 6d mit dem Bezugszeichen 39 versehen.

Dieses Produkt 39 kann nunmehr in Gänze verbaut werden.

Bezüglich der Figurenabfolge der Figur 6 sei angemerkt, dass hier beispielsweise kein Abflusselement 16 vorgesehen ist, wie es in den voranstehenden Figuren dargestellt ist, um die Einsatzmöglichkeiten der Vorrichtung 10' zu erhöhen.

Alternativ könnte aber selbstverständlich auch ein entsprechendes Abflusselement 16 vorgesehen werden, sofern in der Trägerplatte 9' eine entsprechende Öffnung 15 vorgesehen wird, und die Trägerplatte dann an einem zweiten Körper 38 mit einer kongruenten Öffnung angeordnet wird.

Sofern kein Abflusselement 16 vorgesehen ist, kann eine Zuleitung des eigentlich auf der Oberseite 18' befindlichen verbrauchten Nutzwassers zu den Rohren 17 und 20 beispielsweise seitlich, insbesondere über eine Auflauf- oder Duschrinne, erfolgen (nicht dargestellt).

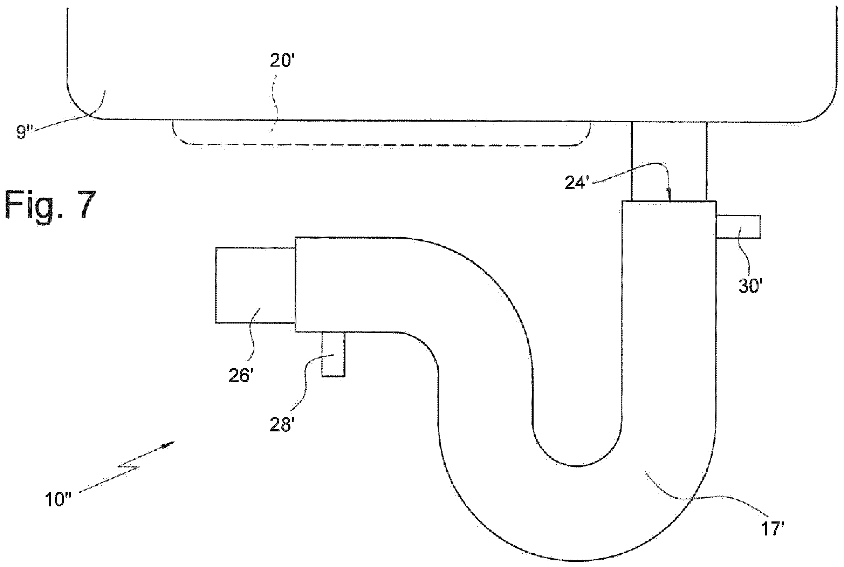

Abschließend zeigt Fig. 7 ein letztes Ausführungsbeispiel der Erfindung mit einer Vorrichtung 10", bei welchem das Wärmetauscherrohr 17' als Siphon ausgebildet ist. Der Siphon 17' ist beispielhaft mit einem als Spüle ausgebildeten Körper 9" verbunden, wobei der Siphon als Koaxialrohr ausgebildet ist und einen Querschnitt gemäß Fig. 4a aufweist, also auch mit zwei Kanälen 25 und 29, welche in Fig. 7 aber nicht dargestellt sind.

Analog zu dem Ausführungsbeispiel gemäß Fig. 4 kann das ablaufende Wasser aus der Spüle 9" über einen Einlass 24' in den mittleren Kanal 25 des Siphons 17' eintreten und an einem Auslass 26' wieder austreten. Analog zu dem Ausführungsbeispiel gemäß Fig. 4 kann das frisch ankommende Wasser an einem Einlass 28' in das Koaxialrohr 17' eintreten, nämlich in einen äußeren Kanal 29, und gegenläufig zum verbrauchten Spülwasser das Rohr 17' durchlaufen sowie dieses an einem Ausgang 30' wieder verlassen. Das zuvor erwärmte Wasser kann einer Armatur oder einem Brenner oder ähnlichem als bereits vorerwärmtes Wasser zugeführt werden, analog zu den obigen Ausführungsbeispielen.

Alternativ, und wie in Fig. 7 gestrichelt angedeutet, kann besagtes Wasser aber auch in diesem Ausführungsbeispiel in einem zweiten Wärmetauscherrohr 20' nach Art eines an dem Körper 9" bzw. dessen flächenhaften Bereich anliegendes Wärmetauscherrohr weitergeleitet werden. Beispielsweise kann dieses Wärmetauscherrohr als Rohrmäander ausgebildet sein. In diesem Fall übernimmt besagtes weiteres Wärmetauscherrohr 20' dabei eine Funktion, etwa gemäß dem Wärmetauscherrohr 20 nach den voranstehenden Ausführungsbeispielen, so dass das Wasser weiter erwärmt werden kann, bevor es dann ebenfalls an die Armatur und/oder einen Brenner weitergeleitet wird.

## Patentansprüche

1. Vorrichtung (10) zur Wärmerückgewinnung bei Nutzwasser, umfassend mindestens ein, insbesondere einstückig-stoffschlüssiges, Wärmetauscherrohr (17, 20) und einen Körper (9) mit einem im Wesentlichen flächenhaften, insbesondere plattenartigen, Bereich (8), **dadurch gekennzeichnet, dass** das mindestens eine Wärmetauscherrohr (17, 20), insbesondere aus Kupfer oder Edelstahl, nicht-geradlinig ausgebildet ist, insbesondere entlang einer zur Haupterstreckungsebene (E₁) des Bereichs (8) nicht orthogonalen, vorzugsweise zu dieser parallelen oder nur geringfügig verkippten, Ebene (E₂, E₃) ausgerichtet ist.

2. Vorrichtung (10) nach Anspruch 1, **dadurch gekennzeichnet, dass** sich das Wärmetauscherrohr (17, 20) ausschließlich entlang der genannten Ebene (E_{2,3}) erstreckt.

3. Vorrichtung (10) nach einem der voranstehenden Ansprüche, **dadurch gekennzeichnet, dass** das Wärmetauscherrohr (20), insbesondere unmittelbar, an dem Bereich (8) anliegt und an diesem festgelegt ist, insbesondere mit mindestens einem Wärmeleitelement (21).

4. Vorrichtung (10) nach einem der voranstehenden Ansprüche, **dadurch gekennzeichnet, dass** das Wärmetauscherrohr (20) als Koaxialrohr oder Mehrkanalrohr ausgebildet ist, insbesondere mit zwei voneinander getrennten Kanälen (25, 29), vorzugsweise einen für zu erwärmendes, frisches Nutzwasser und einen für bereits verbrauchtes, bereits erwärmtes Nutzwasser (7).

5. Vorrichtung (10) nach einem der voranstehenden Ansprüche, **dadurch gekennzeichnet, dass** das Wärmetauscherrohr (17, 20) in Mäanderform oder Kreisbogenform vorliegt.

6. Vorrichtung (10) nach einem der voranstehenden Ansprüche, **dadurch gekennzeichnet, dass** die Vorrichtung (10) ein Wärmetauscherrohr (20) eines ersten Typs, vorzugsweise ein Rohrmäander und/oder ein an dem Bereich (8) anliegendes Rohr, und ein Wärmetauscherrohr (17) eines zweiten Typs, vorzugsweise ein Koaxialrohr und/oder von dem Bereich (8) beabstandetes Rohr, aufweist, welche insbesondere strömungstechnisch in Reihe geschaltet sind.

7. Vorrichtung (10) nach einem der voranstehenden Ansprüche, **dadurch gekennzeichnet, dass** die Vorrichtung (10) einen Zufluss (24) zum Wärmetauscherrohr (17) für, vorzugsweise verbrauchtes Nutzwasser (7), aufweist, welches insbesondere von einer gegenüberliegenden Seite des Bereichs (8), vorzugsweise durch eine Öffnung (15) im Bereich (8) hindurch, zum Wärmetauscherrohr (17) gelangt.

8. Vorrichtung (10) nach einem der voranstehenden Ansprüche, **dadurch gekennzeichnet, dass** der Körper (9) als Duschtasse, (Dusch-)Wanne oder Spüle ausgebildet ist.

9. Vorrichtung (10') nach einem der Ansprüche 1 bis 7, **dadurch gekennzeichnet, dass** der Körper als Trägerplatte (9') ausgebildet ist, an dessen von dem Wärmetauscherrohr (17, 20) abgewandten Seite (18) insbesondere eine Klebeschicht (35) sowie eine die Klebeschicht (35) abdeckende, manuell entfernbare äußere Schutzschicht (36) angeordnet sind.

10. Verfahren zur Herstellung einer Einrichtung zur Wärmerückgewinnung bei Nutzwasser, umfassend die Herstellung einer Vorrichtung (10') nach Anspruch 9 an einem ersten Ort und das Verbringen der Vorrichtung an einen zweiten Ort, an welchem die Vorrichtung (10') an einem separaten Körper (38), insbesondere einer Duschtasse, (Dusch-)Wanne oder Spüle, befestigt, insbesondere verklebt, wird.

11. Verfahren zur Wärmerückgewinnung bei Nutzwasser, insbesondere unter Nutzung einer Vorrichtung (10) nach einem der voranstehenden Ansprüche, umfassend die Leitung von Nutzwasser durch mindestens ein, insbesondere einstückig-stoffschlüssiges, Wärmetauscherrohr (17, 20) unterhalb eines Körpers (9) mit einem im Wesentlichen flächenhaften, insbesondere plattenartigen, Bereich (8), **dadurch gekennzeichnet, dass** das mindestens eine Wärmetauscherrohr (17, 20) nicht geradlinig ausgebildet ist, insbesondere entlang einer zur Haupterstreckungsebene (E₁) des Bereichs (8) nicht orthogonalen, insbesondere zu dieser parallelen oder nur geringfügig verkippten, Ebene (E₂, E₃) ausgerichtet ist.

12. Vorrichtung (10") nach einem der Ansprüche 1 bis 9, **dadurch gekennzeichnet, dass** das Wärmetauscherrohr (17') als Siphon ausgebildet ist, insbesondere nach Art eines Koaxial- oder Mehrkanalrohres.
